# EUROPÄISCHE PATENTSCHRIFT

(11) **EP 2 429 870 B1**
(45) Veröffentlichungstag und Bekanntmachung des Hinweises auf die Patenterteilung: **10.04.2013**
(21) Anmeldenummer: 11719196.5
(22) Anmeldetag: 10.05.2011
(51) Int. Cl.: B60T 1/087, B60T 10/02, F16D 57/00, F16D 57/06

(54) **BREMSANLAGE UND VERFAHREN ZUM EINSTELLEN EINES BREMSMOMENTES EINER SOLCHEN**
BRAKE SYSTEM AND METHOD FOR SETTING A BRAKING TORQUE OF SUCH A BRAKE SYSTEM
SYSTÈME DE FREINAGE ET PROCÉDÉ DE RÉGLAGE D'UN COUPLE DE FREINAGE D'UN TEL SYSTÈME DE FREINAGE

(30) Priorität: 06.07.2010 DE 102010026274
(43) Veröffentlichungstag der Anmeldung: 21.03.2012
(73) Patentinhaber: Voith Patent GmbH, 89522 Heidenheim (DE)
(72) Erfinder: LAUKEMANN, Dieter, 74546 Crailsheim (DE)
(74) Vertreter: Dr. Weitzel & Partner
(86) Internationale Anmeldenummer: PCT/EP2011/002314
(87) Internationale Veröffentlichungsnummer: WO 2012/003898

(56) Entgegenhaltungen:
- EP-A2- 0 873 926
- DE-A1- 2 061 665
- DE-A1- 19 860 706
- DE-C1- 19 853 831

## Beschreibung

Die vorliegende Erfindung betrifft eine Bremsanlage mit einem hydrodynamischen Retarder, wie er als Dauerbremse in Kraftfahrzeugen, beispielsweise Bussen, Lastkraftwagen oder Schienenfahrzeugen eingesetzt wird, sowie ein Verfahren zum Einstellen eines Bremsmomentes einer mit einem solchen Retarder ausgestatteten Bremsanlage.

Hydrodynamische Retarder weisen einen Arbeitsraum auf, der mit einem Arbeitsmedium befüllbar ist, um Drehmoment von einem angetriebenen Primärschaufelrad (Rotor) auf ein stationäres Sekundärschaufelrad, deshalb auch Stator genannt, hydrodynamisch zu übertragen. Anstelle eines stationären Sekundärschaufelrades kann auch ein entgegen dem Drehsinn des Primärschaufelrades umlaufendes Sekundärschaufelrad vorgesehen sein, um einen Gegenlaufretarder auszubilden. Durch Antreiben des Rotors mittels einer abzubremsenden Welle, beispielsweise einer Getriebeausgangswelle oder einer indirekt mit den Antriebsrädern des Kraftfahrzeugs drehfest verbundenen Welle (Gelenkwelle), wird das Arbeitsmedium im Rotor radial nach außen beschleunigt und tritt in den Stator ein, in welchem es radial nach innen strömend verzögert wird. Durch die derart ausgebildete Kreislaufströmung wird Drehmoment - hier als Bremsmoment des Retarders bezeichnet - vom Rotor auf den Stator übertragen. Dabei wird das Primärschaufelrad verzögert und insbesondere die mit dem Primärschaufelrad drehfest ausgeführte Welle, verzögert.

Die Größe des übertragenen Bremsmomentes hängt dabei vom sogenannten Füllungsgrad des hydrodynamischen Retarders ab. Dabei unterscheidet man zwischen dem Zustand der Vollfüllung des Retarders, das heißt jenem Zustand, in welchem die maximal mögliche Arbeitsmediummenge im Arbeitsraum des Retarders zirkuliert, und dem entleerten Zustand des Retarders, das heißt jenem Zustand, in welchem sich kein Arbeitsmedium oder nur ein vorgegebener Rest von Arbeitsmedium im Arbeitsraum des hydrodynamischen Retarders befindet sowie dazwischen liegende Teilfüllungen. Mit zunehmendem füllungsgrad, welcher das Verhältnis der tatsächlichen im Arbeitsraum zirkulierenden Arbeitsmediummenge gegenüber der maximal möglichen im Arbeitsraum zirkulierenden Arbeitsmediummenge (bei der Vollfüllung) beschreibt, steigt das vom Rotor auf den Stator übertragene Drehmoment und somit das vom Retarder erzeugte Bremsmoment.

Die Einstellung eines bestimmten Füllungsgrades des Arbeitsraumes eines hydrodynamischen Retarders und damit die Steuerung des übertragenen Bremsmomentes kann entweder durch Aufbringen eines Steuerdruckes auf das dem Arbeitsraum zugeführte oder zuzuführende Arbeitsmedium oder durch eine Steuerung des Strömungsquerschnittes in einem Arbeitsmediumzulauf oder Arbeitsmediumablauf des hydrodynamischen Retarders mittels eines Regelventils, insbesondere Proportionalventils, ohne Aufbringen eines Steuerdruckes auf das dem Arbeitsraum zugeführte Arbeitsmedium erfolgen. Für letzteres kann der hydrodynamische Retarder beispielsweise im Kühlkreislauf des Fahrzeugs integriert sein. Die europäische Patentschrift EP 1 966 504 B1 beschreibt eine solche Regelung des Füllungsgrades mittels eines Proportionalventils.

Zum Aufbringen eines Steuerdruckes auf das Arbeitsmedium des hydrodynamischen Retarders ist es zum Beispiel bekannt, einen Vorratsraum für das Arbeitsmedium, insbesondere Öl, mit einer druckluftbeaufschlagten Membran vorzusehen. Die Membran trennt das Arbeitsmedium von einem Luftraum, der mittels eines Druckluftsystems, insbesondere Fahrzeugdruckluftsystems, beaufschlagt wird. Mittels eines pneumatischen Ventils kann der Luftdruck als Steuerdruck variiert werden und damit mehr oder weniger Arbeitsmedium aus dem Vorratsraum in den hydrodynamischen Kreislauf des Arbeitsmediums im Arbeitsraum gedrückt beziehungsweise verdrängt werden.

Die vorliegende Erfindung betrifft ausschließlich die letztgenannte Betätigung des hydrodynamischen Retarders mittels eines das Arbeitsmedium im Vorratsraum beaufschlagenden Steuerdruckes. Eine solche Betätigung wird beispielsweise in der europäischen Patentschrift EP 0 958 979 B1 beschrieben.

Weiterhin sind Verfahren zur Steuerung des Bremsmomentes bekannt geworden, bei welchem dem hydrodynamischen Retarder eine Kennlinie oder ein Kennfeld zugeordnet ist, welche/welches in Abhängigkeit des Fahrerwunsches nach einer bestimmten Verzögerung oder Erzeugung einer bestimmten Bremsleistung (Bremsmoment) jedem Betriebspunkt auf dieser Kennlinie oder in diesem Kennfeld einen entsprechenden Steuerdruck für das pneumatische Ventil zum Erzielen eines Bremsmomentes als Stellgröße zuordnet. Der Fahrer wählt hierbei mittels eines Wählhebels eine bestimmte Bremsstufe aus, die ein einzustellendes Retarderbremsmoment darstellt. Bei aktiviertem Retarder und Anforderung des Bremswunsches wird aus der Kennlinie oder aus dem Kennfeld der entsprechende Steuerdruck in Abhängigkeit eines oder mehrerer weiterer Parameter ermittelt und eingestellt, sodass sich ein bestimmter Füllungsgrad an Arbeitsmedium im Arbeitsraum einstellt, wodurch sich zwischen drehangetriebenem Primärschaufelrad und - im Falle des Gegenlaufretarders bei drehangetriebenem Sekundärschaufelrad - die besagte hydrodynamische Kreislaufströmung ausbildet.

Das Dokument WO 2006/037465 A1 beschreibt ein derartiges Verfahren. Der hydrodynamische Retarder umfasst ein Kennfeld, in dem als Parameter der Steuerdruck in Abhängigkeit des einzustellenden Retarderbremsmomentes und die Drehzahl des Primärschaufelrades hinterlegt sind.

Aufgrund von Guss- und Fertigungstoleranzen bei der Herstellung des Retarders unterliegen die sich tatsächlich einstellenden Bremsmomentverläufe bei vorbestimmten Steuerdruckwerten einer Streuung. Die "tatsächliche" Kennlinie weicht dabei teilweise von der im Steuergerät hinterlegten Kennlinie beziehungsweise Kennfeld ab. Diese Abweichung kann zu Komforteinbusen beim Bremsenblending, das heißt beim gezielten Überlagern von Bremsmomenten verschiedener Bremssysteme eines Fahrzeugs, beispielsweise der Motorbremse und des hydrodynamischen Retarders, führen. Insbesondere wenn das verfügbare Bremsmoment kleiner als erwartet ist, ist dies für den Nutzer der Bremsanlage nicht zufriedenstellend und kann zu Reklamationen beim Hersteller führen. Ein zu hohes Bremsmoment hingegen kann die Ursache für einen erhöhten Verschleiß oder gar einen Ausfall des Retarders sein.

Das Dokument DE 198 53 831 C1 beschreibt einen Bremsanlage mit einem hydrodynamischen Retarder und einem inneren und einem äußeren Kreislauf des Arbeitsmediums. Im äußeren Kreislauf ist eine Drossel vorgesehen, deren Querschnitt in Abhängigkeit von der Rotordrehzahl des Retarders veränderbar ist, um ein gewünschten Bremsmomentenkennfeld zu erzielen.

Der vorliegenden Erfindung liegt die Aufgabe zugrunde, eine Bremsanlage sowie ein Verfahren zum Einstellen eines Bremsmoments eines in der Bremsanlage angeordneten hydrodynamischen Retarders anzugeben, mit welchen eine exakte Einstellung des Bremsmomentes unabhängig von Fertigungstoleranzen zuverlässig erreicht werden kann. Insbesondere sollen die Abweichungen zwischen Ist-Bremsmomenten und Soll-Bremsmomenten ohne Nachbearbeitung der Bauteile bei Herstellung, um die Fertigungstoleranzen zu kompensieren, und ohne gesonderte Kalibrierung bei der Inbetriebnahme minimiert werden.

Die erfindungsgemäße Aufgabe wird durch eine Bremsanlage mit einem hydrodynamischen Retarder sowie ein Verfahren gemäß den unabhängigen Ansprüchen gelöst. Die abhängigen Ansprüche geben vorteilhafte und besonders zweckmäßige Ausgestaltungen der Erfindung an.

Die erfindungsgemäße Bremsanlage, insbesondere für ein Kraftfahrzeug, umfasst einen externen Arbeitsmediumkreislauf sowie einen hydrodynamischen Retarder mit einem beschaufelten Rotor und einem beschaufelten Stator, die miteinander einen torusförmigen Arbeitsraum ausbilden, der über einen Einlass mit Arbeitsmedium aus dem externen Arbeitsmediumkreislauf befüllbar ist, welches über einen Auslass wieder zurück in den externen Arbeitsmediumkreislauf geleitet wird, sowie einen Vorratsraum zur Aufnahme von momentan nicht im Arbeitsraum befindlichen beziehungsweise im externen Arbeitsmediumkreislauf zirkulierenden Arbeitsmedium. Weiterhin ist ein Druckbeaufschlagungssystem zum Beaufschlagen des im Vorratsraum enthaltenen Arbeitsmediums mit einem Steuerdruck vorgesehen, sodass mehr oder weniger Arbeitsmedium in den Arbeitsraum verdrängt wird, um ein gewünschtes Bremsmoment einzustellen. Ferner ist ein dem Auslass nachgeschaltetes Drosselventil vorgesehen, umfassend einen beweglichen oder verformbaren Ventilkörper, um den Strömungsquerschnitt für Arbeitsmedium aus dem Arbeitsraum zu variieren, wobei der Ventilkörper in Öffnungsrichtung des Drosselventils mit Arbeitsmediumdruck aus dem Arbeitsraum des hydrodynamischen Retarders und in Schließrichtung mit dem Steuerdruck oder einem von diesem abhängigen Druck beaufschlagt ist.

Der vom Steuerdruck abhängige Druck kann beispielsweiseein zum Steuerdruck (nahezu) proportionaler Druck sein.

Ist dabei der am Ventilkörper angreifende Steuerdruck oder der von diesem abhängigen Druck zunächst höher als der Arbeitsmediumdruck aus dem Arbeitsraum, so wird der Ventilkörper durch die Druckbeaufschlagung derart in Schließrichtung bewegt, dass sich der Strömungsquerschnitt am Auslass des hydrodynamischen Retarders verringert. Infolge des verringerten Strömungsquerschnitts des Auslasses stellt sich in Strömungsrichtung des Arbeitsmediums gesehen vor dem Auslass ein größerer Staudruck und damit ein größerer Füllungsgrad im Arbeitsraum ein.

Diese Verminderung des Strömungsquerschnittes am Auslass des hydrodynamischen Retarders durch das dem Auslass nachgeschaltete Drosselventil und die damit einhergehende Erhöhung des Staudruckes und damit des Füllungsgrades im Arbeitsraum, der wiederum zu einem höheren Bremsmoment führt, bewirkt also, dass bei einem bestimmten Steuerdruck auch ein entsprechend großes Bremsmoment erzeugt wird. Ein zunächst vergleichsweise zu kleines Bremsmoment wird sofort durch die Beaufschlagung des Drosselventils mit dem im Vergleich zu dem Bremsmoment "zu großen" Steuerdruck und die dadurch erfolgende Verminderung des Querschnitts für aus dem Arbeitsraum ausströmendes Arbeitsmediums durch Verlagern des Ventilkörpers korrigiert und das gewünschte "passende" vergleichsweise größere Bremsmoment eingestellt.

Die Verminderung des Strömungsquerschnittes für Arbeitsmedium aus dem Arbeitsraum setzt sich so lange fort, bis der Ventilkörper eine Position eingenommen hat, in der sich der Arbeitsmediumdruck am Auslass und der Steuerdruck unter Berücksichtigung des Flächenverhältnisses der entsprechend durch die Drücke beaufschlagten Flächen des Ventilkörpers und unter Berücksichtigung von einer oder mehreren optional vorgesehenen Vorspanneinrichtungen ausgleichen. Der Ventilkörper bildet somit eine Druckwaage, mittels der der Strömungsquerschnitt für aus dem Arbeitsraum ausströmendes Arbeitsmedium in Abhängigkeit des den Ventilkörper beaufschlagenden Steuerdruckes und des den Ventilkörper beaufschlagenden Arbeitsmediumdruckes automatisch eingestellt beziehungsweise geregelt wird.

Für einen vorgegebenen Steuerdruck kann sich demnach erfindungsgemäß das zugehörige Bremsmoment selbsttätig einstellen, das heißt ohne dass eine Justierung oder Adaption der Steuerkennlinie oder des Steuerkennfeldes in Abhängigkeit von Herstellungstoleranzen oder Toleranzen durch Verschleiß vorgenommen werden muss. Eine Streuung des sich tatsächlich einstellenden Bremsmomentes bei einem vorgegebenen Steuerdruck aufgrund von Bauteiltoleranzen kann trotzdem deutlich reduziert oder vollständig vermieden werden.

Bevorzugt weist der Ventilkörper eine erste Fläche auf, die mit dem Arbeitsmediumdruck und eine zweite Fläche, die mit dem Steuerdruck oder einem davon abhängigen Druck beaufschlagt ist.

Bevorzugt ist der Ventilkörper als Kolbenstange ausgeführt und bildet im Bereich seines dem Auslass abgewandten ersten Endes einen verschiebbaren Kolben aus oder ist an einem solchen angeschlossen. Dabei ist der Kolben in einem Kolbenraum angeordnet und trennt diesen in zwei voneinander abgedichtete Teilräume, wobei der erste Teilraum zur gemeinsamen Verschiebung dies Kolbens und des Ventilkörpers mit dem Steuerdruck oder einem davon abhängigen Druck beaufschlagbar ist.

Mit Vorteil umfasst das Drosselventil einen ringförmigen, insbesondere kreisringförmigen Ventileinsatz, welcher sich mit seiner radial äußeren Oberfläche an einem Gehäuse des hydrodynamischen Retarders oder des Drosselventils abstützt und den Auslass aufweist oder begrenzt.

Bevorzugt stützt sich die Kolbenstange im Bereich ihres dem Auslass zugewandten zweiten Endes mit ihrer radial äußeren Oberfläche auf der radial inneren Oberfläche des Ventileinsatzes ab und ist in Axialrichtung beweglich zu diesem gelagert, insbesondere auf diesem gelagert, um mit dem Ventiteinsatz einen Ventilsitz auszubilden.

Vorteilhaft ist das Drosselventil als Proportional- oder Stetigventil ausgeführt und insbesondere die einzige ummittelbar am hydrodynamischen Retarder angeschlossene Ventilvorrichtung zum variablen Einstellen oder Verändern eines Bremsmomentes im Arbeitsraum des hydrodynamischen Retarders.

Ein erfindungsgemäßes Verfahren zum Einstellen eines Bremsmomentes einer Bremsanlage, insbesondere eines Kraftfahrzeugs, mit einem externen Arbeitsmediumkreislauf und einem Retarder, wobei der Retarder als hydrodynamischer Retarder gemäß der Erfindung ausgeführt ist, umfasst die folgenden Schritte:
- Beaufschlagen des im Vorratsraum enthaltenen Arbeitsmediums mit einem Steuerdruck, sodass mehr oder weniger Arbeitsmedium zur Einstellung des Bremsmoments aus dem Vorratsraum in den Arbeitsraum des hydrodynamischen Retarders verdrängt wird;
- Beaufschlagen des Drosselventils mit dem Steuerdruck oder einem davon abhängigen Druck in Schließrichtung; und zugleich
- Beaufschlagen des Drosselventils mit Arbeitsmediumdruck aus dem Arbeitsraum in Öffnungsrichtung entgegen dem Steuerdruck oder einem davon abhängigen Druck.

Die Erfindung soll nun nachfolgend anhand der Figuren exemplarisch erläutert werden.

Es zeigen:
- Figur 1: eine schematische Darstellung einer Bremsanlage eines Kraftfahrzeugs mit einem hydrodynamischen Retarder;
- Figur 2: einen Ausschnitt aus einem in der Bremsanlage angeordneten hydrodynamischen Retarders in einem Axialschnitt durch dessen Drehachse gemäß einer bevorzugten Ausführungsform.

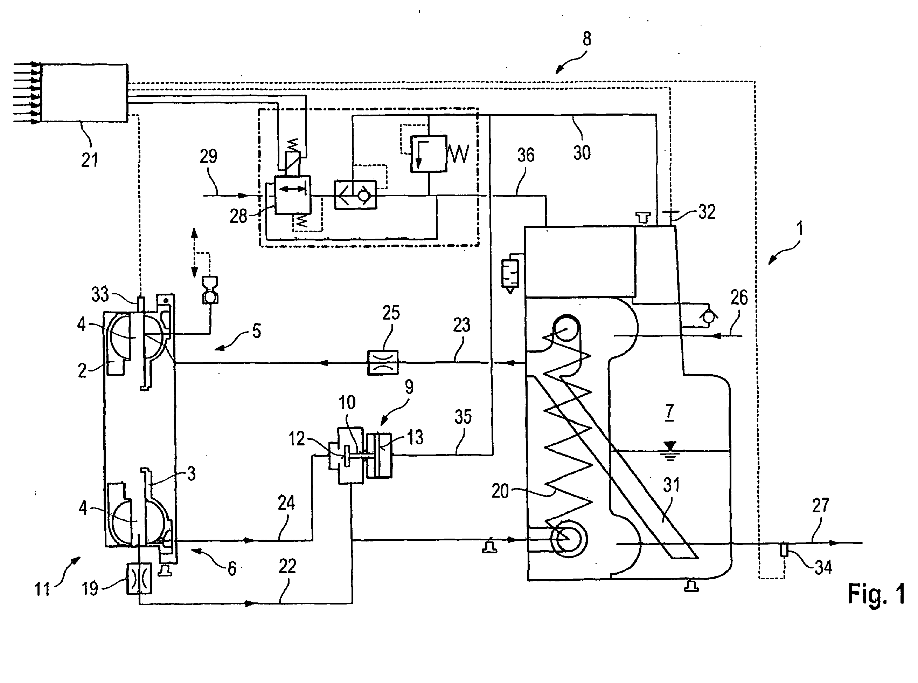

In der Figur 1 ist eine Bremsanlage eines Kraftfahrzeugs mit einem arbeitsmediumführenden externen Arbeitsmediumkreislauf 1 dargestellt. Im Arbeitsmediumkreislauf 1 sind vorliegend in Strömungsrichtung hintereinander folgende Komponenten angeordnet: ein hydrodynamischer Retarder 11, umfassend einen Rotor 2 und einen Stator 3, die miteinander einen torusförmigen Arbeitsraum 4 ausbilden, die Mündung einer ersten Verbindungsleitung 22 zu einem Arbeitsmediumkühler 20, bei dem Arbeitsmedium Öl auch als Ölkühler bezeichnet, eine in der ersten Verbindungsleitung 22 angeordnete feststehende Drossel 19 konstanten Querschnitts, der Arbeitsmediumkühler 20, eine Mündung einer zweiten Verbindungsleitung 23 vom Arbeitsmediumkühler 20 zum Arbeitsraum 4 des hydrodynamischen Retarders 11 sowie eine weitere Drossel 25. Vorliegend mündet die zweite Verbindungsleitung 23 in einen Einlass 5, über den der Arbeitsraum 4 mit Arbeitsmedium aus der ersten Verbindungsleitung 23 des externen Arbeitsmediumkreislaufs 1 befüllbar ist. Über einen Auslass 6, in den die erste Verbindungsleitung 22 mündet, wird das Arbeitsmedium aus dem Arbeitsraum 4 wieder zurück in den externen Arbeitsmediumkreislauf 1 geleitet.

Im vorliegenden Fall ist der Arbeitsmediumkühler 20 in einem Vorratsraum 7 für Arbeitsmedium angeordnet und mit dem Vorratsraum 7 zu einer einzigen Baueinheit zusammengefasst. Dies muss jedoch nicht zwingend der Fall sein. So könnten Arbeitsmediumkühler 20 und Vorratsraum 7 separat vorgesehen sein. Ebenso könnte der hydrodynamische Retarder 11, der externe Arbeitsmediumkreislauf 1, und/oder der Arbeitsmediumkühler 20 und/oder der Vorratsraum 7 zu einer einzigen Baueinheit zusammengefasst sein. Der Arbeitsmediumkühler 20 ist zur Kühlung des Arbeitsmediums des hydrodynamischen Retarders 11 an einen Kühlmediumkreislauf des Kraftfahrzeugs (nicht gezeigt) angeschlossen, siehe die Zuleitung 26 für das Kühlmedium des Kühlkreislaufes und die Ableitung 27 für das Kühlmedium des Kühlkreislaufes.

Zur Einstellung eines bestimmten füllungsgrades des Arbeitsraums 4 ist der Vorratsraum 7 zur Beaufschlagung des im Vorratsraum 7 enthaltenen Arbeitsmediums über eine strömungsleitende Verbindung mit dem Druckbeaufschlagungssystem 8 verbunden. Mittels einer insbesondere dem hydrodynamischen Retarder 11 zugeordneten Steuervorrichtung 21 wird in Abhängigkeit des einzustellenden Bremsmoments, beispielsweise einer mittels eines Wählhebels ausgewählten Bremsstufe, ein entsprechender Überlagerungsdruck (Steuerdruck) berechnet. Der Steuerdruck wird mittels des Druckbeaufschlagungssystems 8 dadurch eingestellt, dass die Steuervorrichtung 21 ein Magnetventil 28 in einer Druckluftleitung 29, in welcher Druckluft aus dem Fahrzeugdruckluftsystem (nicht gezeigt) ansteht, mehr oder minder öffnet. Das Magnetventil 28 stellt in Abhängigkeit seines Öffnungsquerschnittes den Steuerdruck (Luftdruck) in der Arbeitsleitung 30 ein. Die Arbeitsleitung 30 beaufschlagt einerseits das im Vorratsraum 7 enthaltene Arbeitsmedium mit dem Steuerdruck, um dieses in Abhängigkeit des Steuerdruckes mehr oder minder aus dem Vorratsraum 7 in den externen Arbeitsmediumkreislauf 1 und damit den Arbeitsraum 4 des Retarders 11 zu verdrängen. Vorliegend ist hierzu ein unterhalb des Arbeitsmediumspiegels im Vorratsraum 7 mündender Kanal 31 vorgesehen, der mit seinem entgegengesetzten Ende im Bereich des Arbeitsmediumauslasses des Arbeitsmediumkühlers 20 positioniert ist und so eine Verbindung zwischen dem Arbeitsmediumauslass des Arbeitsmediumkühlers 20 und dem Vorratsraum 7 herstellt.

Wenn hingegen der Steuerdruck im Vorratsraum 7, welcher das Arbeitsmedium im Vorratsraum 7 druckbeaufschlagt, vermindert wird, indem der Druck in der Arbeitsleitung 30 durch Reduzieren des Öffnungsquerschnittes oder Schließen des Magnetventils 28 vermindert wird, wobei Druckluft als Steuerdruckmedium aus dem Vorratsraum 7 über die Entlüftungsleitung 36 entwichen kann, kann Arbeitsmedium in entgegengesetzter Richtung durch den Kanal 31 strömen und somit vom im externen Arbeitsmediumkreislauf 1 zirkulierenden Anteil des Arbeitsmediums getrennt werden, was eine Reduzierung des Füllungsgrads des Arbeitraums 4 zur Folge hat.

In dem gezeigten Ausführungsbeispiel ist am Vorratsraum 7, hier im Bereich des Luftraumes mit dem Steuerdruck oberhalb des Arbeitsmediumspiegels, ein Drucksensor 32 vorgesehen, welcher den Druck im Vorratsraum 7 erfasst und an die Steuervorrichtung 21 weiterleitet. Zusätzlich ist am Retarder 11 ein Temperatursensor 33 für das Arbeitsmedium vorgesehen, über welchen der Steuervorrichtung 21 die Arbeitsmediumtemperatur mitgeteilt wird. Die Steuerung oder Regelung des Bremsmoments kann demnach in Abhängigkeit dieser Größen erfolgen. Selbstverständlich sind diese Sensoren nur als Option anzusehen, von denen auch nur einer oder gar keiner vorgesehen werden muss. Ferner ist es möglich, andere oder weitere Sensoren vorzusehen, wie beispielsweise einen Temperatursensor zur Erfassung der Kühlmediumtemperatur im Fahrzeugkühlkreislauf, hier mit 34 bezeichnet, sodass die Steuervorrichtung 21 das Retarderbremsmoment auch in Abhängigkeit der Kühlmediumtemperatur (Kühlwassertemperatur) des Fahrzeugkühlkreislaufes einstellen kann.

Zwischen dem Arbeitsmedium und dem oberhalb des Arbeitsmediumspiegels befindlichen Luftraum des Vorratsraums 7 kann eine Membrane (nicht gezeigt) zur Trennung des Arbeitsmediums von der Druckluft vorgesehen sein, welche von Druckluft oder einem anderen Fluid, insbesondere Gas, beaufschlagbar ist. Diese ist jedoch nicht zwingend notwendig. Weiterhin wäre es denkbar die beiden Drosseln 19, 25 als Drosseln mit einstellbarem Strömungsquerschnitt auszubilden.

Vorliegend mündet im Bereich des Auslasses 6 des Retarders 11 beziehungsweise des Arbeitsraumes 4 ein erstes Ende einer dritten Verbindungsleitung 24, wohingegen deren zweites Ende in der ersten Verbindungsleitung 22, hier in Strömungsrichtung des Arbeitsmediums gesehen hinter der Drossel 19 bzw. vor dem Arbeitsmediumkühler 20 mündet. Wie man derfigur 1 entnehmen kann, mündet im vorliegenden Fall das erste Ende der dritten Verbindungsleitung 24 an einer anderen Stelle im Auslass 6 als das der ersten Verbindungsleitung 22. Selbstverständlich könnte für jede der beiden Verbindungsleitungen 22, 24 auch ein eigener Auslass im Retarder 11 vorgesehen sein. Betrachtet man die erste Verbindungsleitung 22 als Hauptzweig des externen Arbeitsmediumkreislaufs 1, so stellt die dritte Verbindungsleitung 24 vorliegend einen Nebenzweig beziehungsweise parallelen Zweig desselben dar. Dies könnte jedoch anders sein. So könnte die dritte Verbindungsleitung 24 mit ihren beiden Enden in der ersten Verbindungsleitung 22, jeweils in Strömungsrichtung vor bzw. hinter der Drossel 19 münden. Der Strömungsquerschnitt, der zum Ausströmen für Arbeitsmedium aus dem Arbeitsraum 4 zur Verfügung steht, wird demnach zusammen durch den Strömungsquerschnitt der ersten Verbindungsleitung 22 beziehungsweise der darin vorgesehen Drossel 19 und der dritten Verbindungsleitung 24 beziehungsweise, wie nachfolgend erläutert wird, dem hierin vorgesehen Drosselventil 9 gebildet.

So ist nämlich in der dritten Verbindungsleitung 24 ein Drosselventil 9 vorgesehen, das den Strömungsquerschnitt für Arbeitsmedium, das durch die dritte Verbindungsleitung 24 strömt, bestimmt. Das Drosselventil 9 muss nicht zwingend innerhalb der dritten Verbindungsleitung 24 angeordnet sein. So könnte dieses direkt an einem Gehäuse des hydrodynamischen Retarders 11 und insbesondere unmittelbar im Auslass 6 selbst angeordnet sein, um jenen Anteil von Arbeitsmedium zu bestimmen, der in die dritte Verbindungsleitung 24 strömt, Auch ist es möglich, die erste Verbindungsleitung 22 und die dritte Verbindungsleitung 24 durch eine einzige Verbindungsleitung für aus dem Retarder 11 beziehungsweise Arbeitsraum 4 strömendes Arbeitsmedium zu ersetzen, vor welcher beziehungsweise in welcher das Drosselventil 9 positioniert ist, um den Strömungsquerschnitt für Arbeitsmedium in dieser Verbindungsleitung zu bestimmen. Auch mehr als zwei parallele Verbindungsleitungen sind vorstellbar, wobei der Strömungsquerschnitt zumindest einer durch das Drosselventil eingestellt wird.

Das Drosselventil 9 umfasst einen beweglichen Ventilkörper 10, mittels dem der Strömungsquerschnitt für Arbeitsmedium aus dem Arbeitsraum 4, das durch die dritte Verbindungsleitung 24 strömt, variiert werden kann. Der Ventilkörper 10 könnte jedoch auch als verformbare Membrane (nicht gezeigt) ausgeführt sein. Der Ventilkörper 10 weist vorliegend eine erste Fläche 12 auf, die mit dem Arbeitsmediumdruck aus dem Arbeitsraum 4 und eine zweite Fläche 13, die mit dem Steuerdruck oder einem davon abhängigen Druck insbesondere ebenfalls aus dem Druckbeaufschlagungssystem 8 beaufschlagbar ist. Dazu ist die zweite Fläche 13 über eine entsprechende Steuerdruckleitung 35 mit dem Druckbeaufschlagungssystem 8, hier der den Steuerdruck führenden Arbeitsleitung 30 strömungsleitend verbunden.

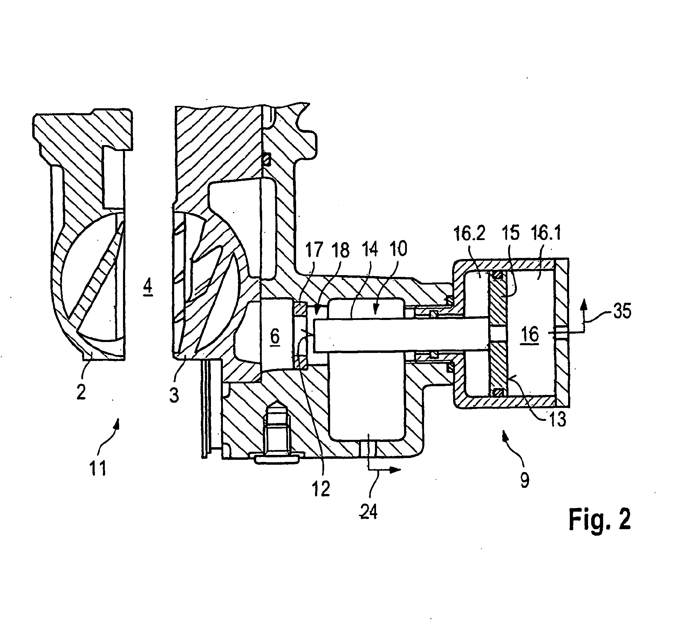

In der Figur 2 ist eine bevorzugte Ausführungsform des Drosselventils 9 aus der Figur 1 in einem Axialschnitt durch die Drehachse des hydrodynamischen Retarders 11 dargestellt. Dabei sind im Wesentlichen die gleichen Bauelemente mit denselben Bezugszeichen wie in der Figur 1 versehen. Der Anschluss des Drosselventils 9 am Retarder 11 ist hier jedoch gegenüber der Prinzipskizze aus der Figur 1 geändert. In Figur 2 ist das Drosselventil 9 an einem Gehäuse des hydrodynamischen Retarders 11 axial benachbart zum Arbeitsraum 4, insbesondere zum Stator 3, im Bereich des Auslasses 6 angeordnet. Dies ist jedoch nicht zwingend notwendig. Ebenso könnte das Drosselventil 9 an einer anderen Stelle im hydrodynamischen Retarder 11 angeordnet sein. Das Drosselventil 9 könnte auch mit einem Gehäuse des hydrodynamischen Retarders 11 integral ausgeführt oder separat davon am Gehäuse montiert sein.

Ferner ist vorliegend im Bereich des Auslasses 6 ein Ventileinsaz 17, hier als Kreisring ausgeführt, angeordnet. Hier begrenzt dieser den Auslass 6. Weiterhin ist der Ventilkörper 10 als zylindrische Kolbenstange 14 ausgeführt, welche an ihrem dem Auslass 6 abgewandten Ende einen Kolben 15 trägt. Kolbenstange 14 und Kolben 15 sind hier starr miteinander verbunden. Der Kolben 15 ist hier in einem Kolbenraum 16 angeordnet und teilt diesen in zwei voneinander abgedichtete Teilräume 16.1 und 16.2. Über die Steuerdruckleitung 35 ist der erste Teilraum 16.1 zur Axialverschiebung des Kolbens 15 mit dem Druckbeaufschlagungssystem (in der Figur 2 nicht gezeigt) strömungsleitend verbunden. Somit kann der Kolben 15 durch Anlegen beziehungsweise Erhöhen eines Steuerdrucks in Axialrichtung in Richtung auf den Auslass 6 (Schließrichtung) verschoben werden.

Da vorliegend die Kolbenstange 14 und der Kolben 15 starr miteinander verbunden sind, wird bei Verschiebung des Kolbens 15 gleichzeitig auch die Kolbenstange 14 mit verschoben. Der Ventileinsatz 17 bildet einen Ventilsitz 18, der mit der radial äußeren Oberfläche der Kolbenstange 14 zusammenarbeitet, um den Strömungsquerschnitt für aus dem Auslass 6 in die dritte Verbindungsleitung 24 strömendes Arbeitsmedium variabel einzustellen. Je weiter nun der Kolben 15 durch Druckbeaufschlagen mit dem Steuerdruck in Richtung auf den Auslass 6 verschoben wird, desto geringer wird der Strömungsquerschnitt für Arbeitsmedium aus dem Auslass 6.

Natürlich wäre auch eine andere, von der kreisrunden Form abweichende Querschnittsform, insbesondere Polygonform, der Kolbenstange 14 denkbar. Der Ventileinsatz 17 würde dann bevorzugt eine komplementäre Ausnehmung zur radial äußeren Oberfläche der Kolbenstange 14 aufweisen. Es ist jedoch auch vorstellbar, dass verschiedene Querschnittsformen von Ventileinsatz 17 und Kolbenstange 14 zusammenarbeiten.

Bei aktiviertem hydrodynamischem Retarder 11 wird aufgrund dessen Pumpwirkung Arbeitsmedium aus dem Arbeitsraum 4 ausgetrieben und in den Auslass 6 gefördert. Hierdurch wird die Fläche 12, vorliegend die Stirnseite der Kolbenstange 14 mit dem Arbeitsmediumdruck beaufschlagt. Gleichzeitig wird die Fläche 13 des Kolbens 15 mit dem Steuerdruck (oder bei einer anderen Ausgestaltung auch einem hiervon abhängigen Druck) aus dem Druckbeaufschlagungssystem beaufschlagt. Abhängig von der Höhe der beiden Drücke (Arbeitsmediumdruck am Auslass 6 und Steuerdruck) und in Abhängigkeit der Flächenverhältnisse der Flächen 12 und 13 bewegt sich die Kolbenstange 14 so lange in Richtung der an den Flächen 12 und 13 angreifenden niedrigeren Druckkraft, bis sich die an den Flächen 12 und 13 wirkenden Kräfte ausgleichen. Ist zum Beispiel die Kraft aus dem auslassseitigen Arbeitsmediumdruck an der Fläche 12 vergleichsweise größer, so wird die Kolbenstange 14 in Richtung weg vom Auslass 6 bewegt (Öffnungsrichtung). Dadurch, dass nun der Strömungsquerschnitt im Auslass 6 durch Öffnen des Drosselventils 9 größer wird, fällt der Arbeitsmediumdruck am Auslass 6 ab. Der Füllungsgrad des Arbeitsraumes 4 wird reduziert, ebenso das Bremsmoment des Retarders 11. Die Kolbenstange 14 wird so lange weiter im Sinne eines Öffnens des Drosselventils 9 verschoben, bis sich die an den Flächen 12 und 13 angreifenden Kräfte ausgleichen.

Ist die Kraft aus dem Steuerdruck an der Fläche 13 größer als die Kraft aus dem Arbeitsmediumdruck an der Fläche 12, so wird die Kolbenstange 14 auf den Auslass 6 hin verschoben und reduziert den Strömungsquerschnitt für Arbeitsmedium aus dem Auslass. Hierdurch steigt der Arbeitsmediumdruck am Auslass 6 an, zusammen mit dem Druck des Arbeitsmediums beziehungsweise dem Füllungsgrad im Arbeitsraum 4 und dem zugehörigen Bremsmoment. Die Kolbenstange 14 wird wieder so lange bewegt, bis sich die an den Flächen 12, 13 angreifenden Kräfte ausgleichen. Das Drosselventil 9 fungiert somit als Druckwaage und ermöglicht die selbsttätige Einstellung (Regelung) eines exakten Bremsmomentes unabhängig von den Fertigungstoleranzen der strömungsbeeinflussenden Bauteile des Retarders.

Mittels der erfindungsgemäßen Lösung wird somit unabhängig von auftretenden Fertigungstoleranzen für jeden hydrodynamischen Retarder einer gleichen Baureihe das zu erzielende Soll-Bremsmoment stets automatisch eingestellt. Eine konstruktive Nachbearbeitung des Strömungsquerschnitts des Auslasses 6 oder ein Vermessen der Bremskennlinie des hydrodynamischen Retarders 11 an einem Prüfstand kann deshalb entfallen.

Auch ist eine zusätzliche Regelvorrichtung, welche beispielsweise eine Soll-Ist-Abweichung des einzustellenden und tatsächlich erreichten Bremsmomentes feststellt, um entsprechend einer Regelgröße den Strömungsquerschnitt am Auslass 6 zu ändern, nicht nötig, kann jedoch, wenn gewünscht, vorgesehen werden.

### Bezugszeichenliste

- 1: Arbeitsmediumkreislauf
- 2: Rotor
- 3: Stator
- 4: Arbeitsraum
- 5: Einlass
- 6: Auslass
- 7: Vorratsraum
- 8: Druckbeaufschlagungssystem
- 9: Drosselventil
- 10: Ventilkörper
- 11: hydrodynamischer Retarder
- 12, 13: Fläche
- 14: Kolbenstange
- 15: Kolben
- 16: Kolbenraum
- 16.1, 16.2: Teilraum
- 17: Ventileinsatz
- 18: Ventilsitz
- 19: Drossel
- 20: Arbeitsmediumkühler
- 21: Steuervorrichtung
- 22, 23, 24: Verbindungsleitung
- 25: Drossel
- 26: Zuleitung für Kühlmedium
- 27: Ableitung für Kühlmedium
- 28: Magnetventil
- 29: Druckluftleitung
- 30: Arbeitsleitung
- 31: Kanal
- 32: Drucksensor
- 33: Temperatursensor
- 34: Temperatursensor
- 35: Steuerdruckleitung
- 36: Entlüftungsleitung

## Patentansprüche

1. Bremsanlage, insbesondere für ein Kraftfahrzeug,
1.1 mit einem externen Arbeitsmediumkreislauf (1) und
1.2 mit einem hydrodynamischen Retarder (11), umfassend einen beschaufelten Rotor (2) und einen beschaufelten Stator (3), die miteinander einen torusförmigen Arbeitsraum (4) ausbilden, der über einen Einlass (5) mit Arbeitsmedium aus dem externen Arbeitsmediumkreislauf (1) befüllbar ist, welches über einen Auslass (6) wieder zurück in den externen Arbeitsmediumkreislauf (1) geleitet wird;
1.3 mit einem Vorratsraum (7) zur Aufnahme von momentan nicht im Arbeitsraum (4) befindlichen oder im externen Arbeitsmediumkreislauf (1) zirkulierenden Arbeitsmedium;
1.4 mit einem Druckbeaufschlagungssystem (8) zum Beaufschlagen des im Vorratsraum (7) enthaltenen Arbeitsmediums mit einem Steuerdruck, sodass mehr oder weniger Arbeitsmedium in den Arbeitsraum (4) verdrängt wird, um ein gewünschtes Bremsmoment einzustellen;
**gekennzeichnet durch**
1.5 ein dem Auslass (6) nachgeschaltetes Drosselventil (9), umfassend einen beweglichen oder verformbaren Ventilkörper (10), um den Strömungsquerschnitt für Arbeitsmedium aus dem Arbeitsraum (4) zu variieren; wobei
1.6 der Ventilkörper (10) in Öffnungsrichtung des Drosselventils (9) mit Arbeitsmediumdruck aus dem Arbeitsraum (4) des hydrodynamischen Retarders (11) und in Schließrichtung mit dem Steuerdruck oder einem von diesem abhängigen Druck beaufschlagt ist.

2. Bremsanlage gemäß Anspruch 1, **dadurch gekennzeichnet, dass** der Ventilkörper (10) eine erste Fläche (12) aufweist, die mit dem Arbeitsmediumdruck beaufschlagt ist, und eine zweite Fläche (13), die mit dem Steuerdruck oder dem von diesem abhängigen Druck beaufschlagt ist.

3. Bremsanlage gemäß einem der Ansprüche 1 oder 2, **dadurch gekennzeichnet, dass** der Ventilkörper (10) als Kolbenstange (14) ausgeführt ist und im Bereich seines dem Auslass (6) abgewandten ersten Endes einen verschiebbaren Kolben (15) ausbildet oder an einem solchen angeschlossen ist;
3.1 der Kolben (15) in einem Kolbenraum (16) angeordnet ist und diesen in zwei voneinander abgedichtete Teilräume (16.1, 16.2) trennt; wobei
3.2 der erste Teilraum (16.1) zur gemeinsamen Verschiebung des Kolbens (15) und des Ventilkörpers (10) mit dem Steuerdruck oder dem von diesem abhängigen Druck beaufschlagt ist.

4. Bremsanlage gemäß einem der Ansprüche 1 bis 3, **dadurch gekennzeichnet, dass** das Drosselventil (9) einen ringförmigen, insbesondere kreisringförmigen Ventileinsatz (17) umfasst, welcher sich mit seiner radial äußeren Fläche an einem Gehäuse des hydrodynamischen Retarders (11) oder des Drosselventils (9) abstützt und den Auslass (6) ausbildet oder wenigstens teilweise begrenzt.

5. Bremsanlage gemäß einem der Ansprüche 1 bis 4, **dadurch gekennzeichnet, dass** der Ventilkörper (10), der Kolben (15) und der Ventileinsatz (17) zueinander konzentrisch angeordnet sind.

6. Bremsanlage gemäß einem der Ansprüche 3 bis 5, **dadurch gekennzeichnet, dass** sich die Kolbenstange (14) im Bereich ihres dem Auslass (6) zugewandten zweiten Endes mit ihrer radial äußeren Oberfläche auf der radial inneren Oberfläche des Ventileinsatzes (17) abstützt und in Axialrichtung beweglich zu diesem gelagert ist, um mit dem Ventileinsatz (17) einen Ventilsitz (18) auszubilden.

7. Bremsanlage gemäß einem der Ansprüche 1 bis 6, **dadurch gekennzeichnet, dass** das Drosselventil (9) als Proportional- oder Stetigventil ausgeführt ist und insbesondere die einzige unmittelbar am hydrodynamischen Retarder (11) angeschlossene Ventilvorrichtung zur veränderbaren Einstellung eines Bremsmomentes im Arbeitsraum (4) des hydrodynamischen Retarders (11) ist.

8. Verfahren zum Einstellen des Bremsmomentes einer Bremsanlage gemäß einem der Ansprüche 1 bis 7, insbesondere eines Kraftfahrzeugs, mit einem externen Arbeitsmediumkreislauf (1) und einem Retarder, wobei der Retarder als hydrodynamischer Retarder (11) ausgeführt ist; mit den folgenden Schritten:
8.1 Beaufschlagen des im Vorratsraum (7) enthaltenen Arbeitsmediums mit einem Steuerdruck, sodass mehr oder weniger Arbeitsmedium zum Einstellen des Bremsmomentes aus dem Vorratsraum (7) in den Arbeitsraum (4) des hydrodynamischen Retarders (11) verdrängt wird;
8.2 Beaufschlagen des Drosselventils (9) mit dem Steuerdruck oder einem davon abhängigen Druck in Schließrichtung;
**dadurch gekennzeichnet, dass**
8.3 das Drosselventil (9) zugleich mit Arbeitsmediumdruck aus dem Arbeitsraum (4) in Öffnungsrichtung entgegen dem Steuerdruck oder einem davon abhängigen Druck beaufschlagt wird.

## Claims

1. A brake system, especially for a motor vehicle, comprising
1.1 an external working medium circuit (1), and
1.2 a hydrodynamic retarder (11), having a bladed rotor (2) and a bladed stator (3) which jointly form a toroidal working chamber (4), which can be filled via an inlet (5) with working medium from the external working medium circuit (1), which medium is conducted via an outlet (6) back into the external working medium circuit (1);
1.3 a storage space (7) for accommodating working medium which is currently not in the working chamber (4) or is circulating in the external working medium circuit (1);
1.4 a pressurization system (8) for applying a control pressure to the working medium contained in the storage space (7), so that more or less working medium is displaced into the working chamber in order to set a desired braking torque,
**characterized by**
1.5 a throttle valve (9) which is connected downstream of the outlet (6) and comprises a movable or deformable valve body (10) in order to vary the flow cross section for the working medium from the working chamber (4), with
1.6 the valve body (10) being subjected to working medium pressure from the working chamber (4) of the hydrodynamic retarder (11) in the opening direction of the throttle valve (9) and to control pressure or a pressure dependent thereon in the closing direction.

2. A braking system according to claim 1, **characterized in that** the valve body (10) comprises a first area (12) which is subjected to the working medium pressure and a second area (13) which is subjected to the control pressure or a pressure dependent thereon.

3. A braking system according to one of the claims 1 or 2, **characterized in that** the valve body (10) is arranged as a piston rod (14) and forms a displaceable piston (15) in the region of its first end facing away from the outlet (6), or is connected to such a piston;
3.1 the piston (15) is arranged in a piston chamber (16) and divides said chamber into two mutually sealed partial chambers (16.1, 16.2), with
3.2 the first partial chamber (16.1) being subjected to the control pressure or a pressure dependent thereon for joint displacement of the piston (15) and the valve body (10).

4. A braking system according to one of the claims 1 to 3, **characterized in that** the throttle valve (9) comprises an annular, especially ring-shaped, valve insert (17) which rests with its radially outer area on a housing of the hydrodynamic retarder (11) or the throttle valve (9), and forms or at least partly delimits the outlet (6).

5. A braking system according to one of the claims 1 to 4, **characterized in that** the valve body (10), the piston (15) and the valve insert (17) are arranged concentrically with respect to each other.

6. A braking system according to one of the claims 3 to 5, **characterized in that** in the region of its second end facing the outlet (6) the piston rod (14) rests with its radially outer surface on the radially inner surface of the valve insert (17), and is movably arranged in relation to the same in order to form a valve seat (18) with the valve insert (17).

7. A braking system according to one of the claims 1 to 6, **characterized in that** the throttle valve (9) is arranged as a proportional or continuous valve, and is especially the only valve apparatus connected directly to the hydrodynamic retarder for the variable setting of a braking torque in the working chamber (4) of the hydrodynamic retarder (11).

8. A method for setting the braking torque of a brake system according to one of the claims 1 to 7, especially a motor vehicle, having an external working medium circuit (1) and a retarder, with the retarder being arranged as a hydrodynamic retarder (11), comprising the following steps:
8.1 subjecting the working medium contained in the storage space (7) to a control pressure, so that more or less working medium is displaced from the storage space (7) into the working chamber (4) of the hydrodynamic retarder (11) for setting the braking torque;
8.2 subjecting the throttle valve (9) to the control pressure or a pressure dependent thereon in the closing direction;
**characterized in that**
8.3 the throttle valve (9) is simultaneously subjected to working medium pressure from the working chamber (4) in the opening direction against the control pressure or a pressure dependent thereon.

## Revendications

1. Installation de freinage, en particulier pour un véhicule à moteur,
1.1 avec un circuit de fluide de travail externe (1) et
1.2 avec un retardateur hydrodynamique (11), comprenant un rotor (2) à aubes et un stator (3) à aubes qui forment ensemble un espace de travail toroïdal (4) pouvant être rempli à travers une entrée (5), à partir du circuit de fluide de travail externe (1), avec du fluide de travail qui est ramené via une sortie (6) dans le circuit de fluide de travail externe (1) ;
1.3 avec un espace de réserve (7) destiné à recevoir du fluide de travail qui ne se trouve pas dans l'espace de travail (4) ni en circulation dans le circuit de fluide de travail externe (1) à un moment donné ;
1.4 avec un système d'application de pression (8) pour l'application au fluide de travail contenu dans l'espace de réserve (7) d'une pression pilote, de façon à refouler une quantité plus ou moins grande de fluide de travail dans l'espace de travail (4) pour établir un couple de freinage souhaité ; **caractérisée en ce qu'**elle comprend
1.5 une soupape d'étranglement (9) montée en aval de la sortie (6) et comprenant un corps de soupape (10) mobile ou déformable, pour faire varier la section d'écoulement du fluide de travail hors de l'espace de travail (4),
1.6 le corps de soupape (10) étant soumis dans le sens de l'ouverture de la soupape d'étranglement (9) à la pression du fluide de travail sortant de l'espace de travail (4) du retardateur hydrodynamique (11) et dans le sens de la fermeture à la pression pilote ou à une pression dépendant de celle-ci.

2. Installation de freinage selon la revendication 1, **caractérisée en ce que** le corps de soupape (10) présente une première surface (12) qui est soumise à la pression du fluide de travail et une deuxième surface (13) qui est soumise à la pression pilote ou à la pression dépendant de celle-ci.

3. Installation de freinage selon l'une des revendications 1 ou 2, **caractérisée en ce que** le corps de soupape (10) est construit comme une tige de piston (14) et forme au niveau de sa première extrémité tournée à l'opposé de la sortie (6) un piston coulissant (15) ou est raccordé à celui-ci ;
3.1 le piston (15) est disposé dans un espace de piston (16) et partage celui-ci en deux parties d'espace (16.1, 16.2),
3.2 la première partie d'espace (16.1) étant soumise à la pression pilote ou à la pression dépendant de celle-ci pour déplacer ensemble le piston (15) et le corps de soupape (10).

4. Installation de freinage selon l'une des revendications 1 à 3, **caractérisée en ce que** la soupape d'étranglement (9) comprend un insert de soupape (17) annulaire, en particulier en forme d'anneau circulaire, qui s'appuie par sa surface extérieure dans le sens radial sur un logement du retardateur hydrodynamique (11) ou de la soupape d'étranglement (9) et forme la sortie (6) ou la délimite au moins en partie.

5. Installation de freinage selon l'une des revendications 1 à 4, **caractérisée en ce que** le corps de soupape (10), le piston (15) et l'insert de soupape (17) sont disposés de façon concentrique les uns par rapport aux autres.

6. Installation de freinage selon l'une des revendications 3 à 5, **caractérisée en ce que** la tige de piston (14) s'appuie au niveau de sa deuxième extrémité orientée vers la sortie (6), par sa surface extérieure dans le sens radial, sur la surface intérieure dans le sens radial de l'insert de soupape (17) et est supportée de façon mobile par rapport à celui-ci dans le sens axial pour former un siège de soupape (18) avec l'insert de soupape (17).

7. Installation de freinage selon l'une des revendications 1 à 6, **caractérisée en ce que** la soupape d'étranglement (9) est construite comme une soupape proportionnelle ou constante et forme en particulier le seul dispositif de soupape raccordé directement au retardateur hydrodynamique (11) pour le réglage variable d'un couple de freinage dans l'espace de travail (4) du retardateur hydrodynamique (11).

8. Procédé pour régler le couple de freinage d'une installation de freinage selon l'une des revendications 1 à 7, en particulier dans un véhicule à moteur, avec un circuit de fluide de travail externe (1) et un retardateur, lequel retardateur est conçu comme un retardateur hydrodynamique (11), comprenant les étapes suivantes :
8.1 application d'une pression pilote au fluide de travail contenu dans l'espace de réserve (7), de façon à refouler une quantité plus ou moins grande de fluide de travail dans l'espace de travail (4) du retardateur hydrodynamique (11) à partir de l'espace de réserve (7) pour régler le couple de freinage ;
8.2 application de la pression pilote ou d'une pression dépendant de celle-ci à la soupape d'étranglement (9) dans le sens de la fermeture ;
**caractérisé en ce que**
8.3 la soupape d'étranglement (9) est soumise en même temps à la pression du fluide de travail provenant de l'espace de travail (4) dans le sens de l'ouverture, en sens inverse de la pression pilote ou d'une pression dépendant de celle-ci.
